# EUROPEAN PATENT SPECIFICATION

(11) **EP 1 886 840 B1**
(45) Date of publication and mention of the grant of the patent: **20.04.2011**
(21) Application number: 06016735.0
(22) Date of filing: 10.08.2006
(51) Int. Cl.: B60B 33/02

(54) **Wheel assembly**
Radanordnung
Ensemble pour roue

(43) Date of publication of application: 13.02.2008
(73) Proprietor: Haion Caster Industrial Co., Ltd., Taipei County 241 (TW)
(72) Inventor: Chou, Chuan-Hai, Sanchong City Taipei County 241 (TW)
(74) Representative: Horak, Michael

(56) References cited:
- DE-A1- 2 340 109
- DE-U1- 9 308 312
- GB-A- 1 449 292
- JP-A- 58 218 402
- US-A- 3 571 842
- US-B1- 6 810 560

## Description

### BACKGROUND OF THE INVENTION

### (a) Field of the Invention

The present invention relates to a wheel assembly having an arresting portion, and particularly to a wheel assembly capable of limiting movement and rotation directions of a wheel simultaneously.

### (b) Description of the Prior Art

A conventional truckle wheel assembly substantially comprises a fixing base, a wheel frame, a plurality of balls and a wheel. The fixing base is fixed on a bottom of a machine by screws. The bottom of the machine forms a ring projection. At least a first receiving groove is defined around an outer surface of the ring projection. The wheel frame forms a ring neck on a top thereof for hitching the ring projection. At least a second receiving groove is defined along an inner surface of the ring neck and corresponds to the first receiving grooves. A plurality of balls is embedded and is rollable in the first receiving grooves and the second receiving grooves. The wheel is pivoted on a bottom of the wheel frame and is rotatable about a wheel axle. The outer surface of the ring projection and the inner surface of the ring neck both have conic shape, which reduces shearing strength the balls bear and prevents the balls from abrasion or split, correspondingly prolonging their lives.

However, in use, the truckle wheel assembly is fixed on a bottom of an object for moving the object easily. Ground of the predetermined target position is not always flat, for example, it may be a slope. So people have to place obstruction between the wheel and the ground to stop the wheel. Sometimes people also place obstruction between the wheel and the ground to prevent the wheel from rotating. The obstruction often is just a stone, a brick, or some paper, which is picked up at random in the predetermined position. It is hard to stop the wheel and the object when there is nothing to serve as obstruction.

The document US-B1-6 810 560 discloses a castor including a castor-supporting member, a brake unit, a direction gear, a castor unit, and a threaded rod unit and an orienting system. The brake unit is combined with the castor support member by means of the threaded rod unit, involving an upper brake button placed on a lower brake unit. When the upper brake unit is pressed down, a brake plate of the brake unit is pressed down on the surface of the castor body to stop it. When the upper brake button is further pressed down a little, the brake plate is released to move up, with the brake taken off the castor body. And a disc gear formed in the front portion of the brake plate and engaging the direction gear becomes disengaged from the direction gear. When the brake plate is pressed down to stop the castor body, the disc gear is moved up to engage the direction gear, keeping the castor body immovable in its direction.; The orienting system consists of position plate, a pedal and a release plate. When the pedal plate is pressed down, the position plate engages with the direction gear to stop it and then the castor body is also secured in rolling direction, If the release plate is pressed down, the secured direction of the castor body is freed.

### SUMMARY OF THE INVENTION

Accordingly, an object of the present invention is to provide a wheel assembly which simultaneously limits movement and rotation directions of the wheel.

To achieve the above object, the wheel assembly of the present invention comprises an inverted U-shaped support frame, a wheel movably coupling to elongated grooves of the support frame by an axis lever, and a limiting device movably pivoted between the wheel and the support frame by the axis lever. The support frame includes a rotating axle for retaining an object. A ratchet gear is formed on an end of the rotating axle. The limiting device includes a pressing unit on an end thereof and an arresting unit on an opposite end. The arresting unit has a link plate, a support plate, and a transverse plate connecting the link plate and the support plate. At least a tooth-like biasing portion is formed on an edge of the link plate and opposite the support plate. At least a stop portion is formed on the support plate for abutting against the wheel. A tooth-like protrusion is formed on the transverse plate for corresponding to the ratchet gear.

### BRIEF DESCRIPTION OF THE DRAWINGS

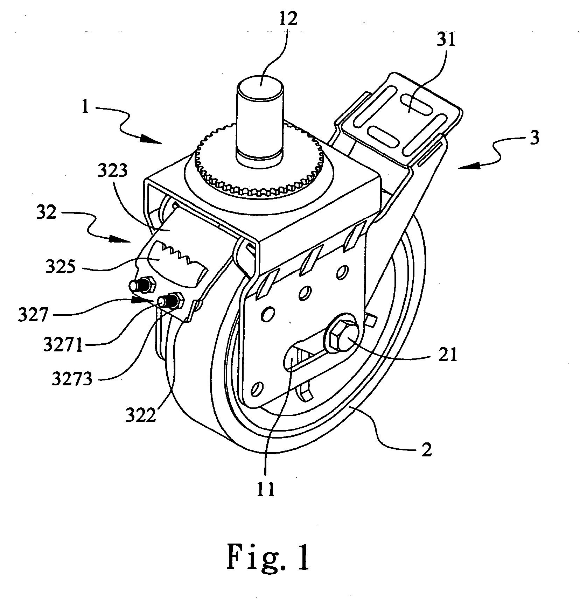

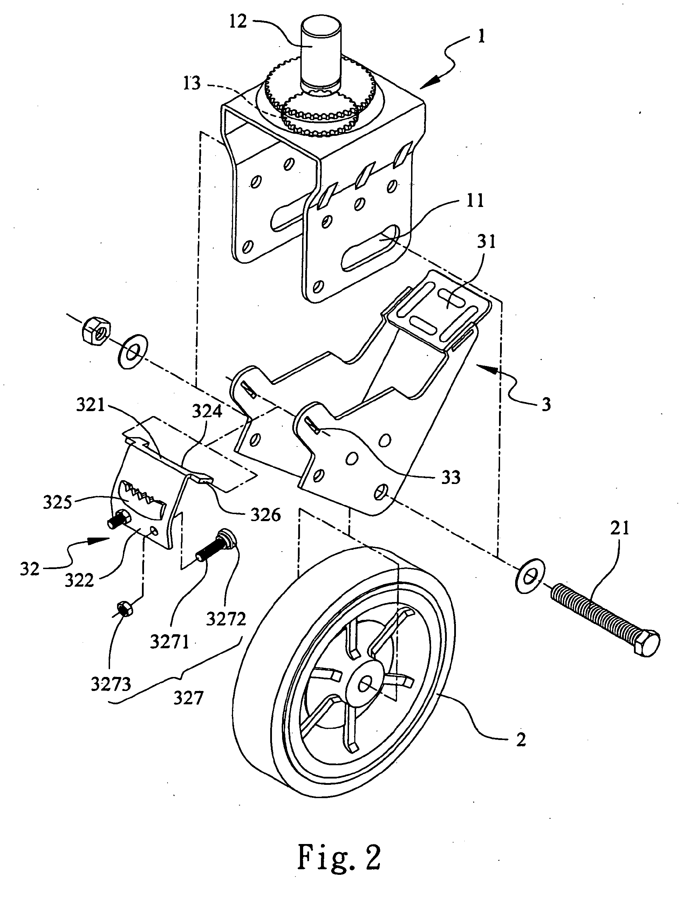

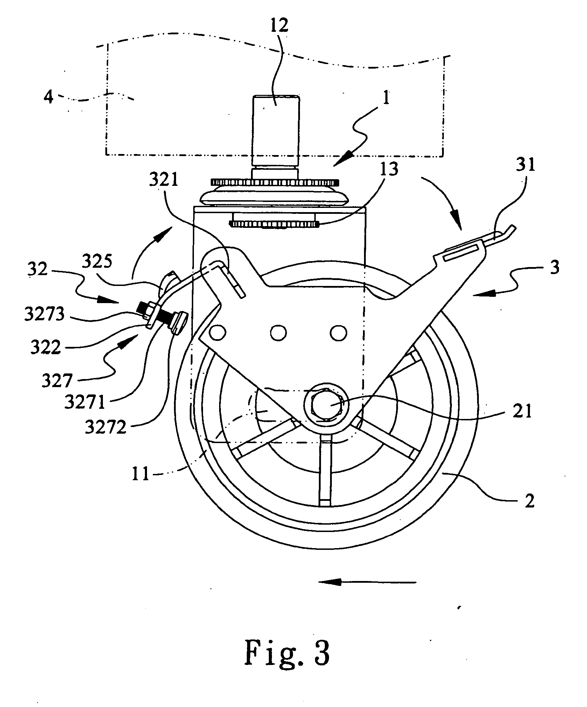

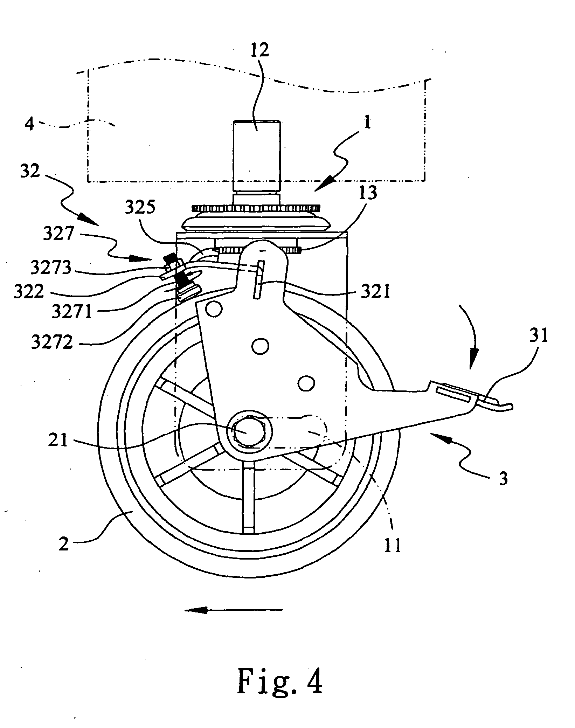

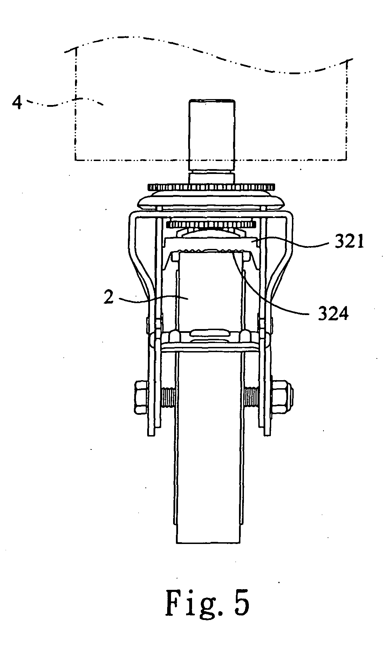

Fig. 1 is a perspective view of a wheel assembly according to the present invention. Fig. 2 is an exploded view of the wheel assembly of Fig. 1. Figs. 3 and 4 are side views of the wheel assembly in use. Fig. 5 is a front view of the wheel assembly in use.

### DETAILED DESCRIPTION OF THE PREFERRED EMBODIMENTS

With reference to Figs. 1 and 2, a wheel assembly 1 in accordance with the present invention comprises an inverted U-shaped support frame 1, a wheel 2 mounted on the support frame 1, and a limiting device 3 for limiting movement and rotation directions of the wheel 2 simultaneously.

The support frame 1 includes a pair of side walls (not labeled) defining elongated grooves 11 therein, and a rotating axle 12 on a surface thereof for-retaining an object 4 (shown in Fig. 3). A ratchet gear 13 is formed on an end of the rotating axle 12.

The wheel 2 movably couples to the elongated grooves 11 of the support frame 1 by an axis lever 21.

The limiting device 3 is movably pivoted between the wheel 2 and the support frame 1 by the axis lever 21. The limiting device 3 includes a pressing unit 31 on an end thereof, an arresting unit 32 on an opposite end thereof. The arresting unit 32 comprises a link plate 321, a support plate 322, and a transverse plate 323 between the link plate 321 and the support plate 322. The link plate 321 forms wing plates 326 on opposite ends thereof. A holes 33 disposed on the limiting device 3 for engaging with the wing plates 326. At least a tooth-like biasing portion 324 is formed on an edge of the link plate 321 and opposite to the support plate 322. At least a stop portion 327 is formed on the support plate 322 for abutting against the wheel 2. The stop portion 327 comprises a screw bolt 3271, a pressing block 3272 connecting with an end of the screw bolt 3271, and a nut 3273 on the screw bolt 3271. A tooth-like protrusion 325 is formed on the transverse plate 323 for corresponding to the ratchet gear 13.

Referring to Figs. 3, 4 and 5, in practice, an object 4 is retained on the rotating axle 12 of the support frame 1. The wheel 2 rotates to move the object 4 easily. In the event that the pressing unit 31 is pressed downwardly, the arresting unit 32 is brought upward. The axis lever 21 moves forward with respect to the elongated grooves 11, driving the wheel 2 forward. Meanwhile the link plate 321 and the support plate 322 abut against peripheral of the wheel 2 simultaneously. The biasing portions 324 presses against the peripheral of the wheel 2. The pressing blocks 3272 of the stop portions 327 abut against the peripheral of the wheel 2 as well. In this embodiment, two biasing portions 324 and two stop portions 327 cooperate to form four-point type for stopping the wheel 2. The projection 325 of the transverse plate 323 engages with the ratchet gear 13. Thus, when the pressing unit 31 is pressed, the arresting unit 32 abuts against the wheel 2 and the ratchet gear 13, limiting movement and rotation directions of the wheel 2.

The pressing block 3272 of the stop portion 327 is adjustable relative to the peripheral of the wheel 2. According to thickness of the wheel 2, the nut 3273 rotate about the screw bolt 3271 clockwise or counterclockwise, making the screw bolt 3271 forward or backward to adjust distance between the pressing block 3272 and the peripheral of the wheel 2.

It is understood that the invention may be embodied in other forms without departing from the scope thereof, as defined by the appended claims. Thus, the present examples and embodiments are to be considered in all respects as illustrative and not restrictive, and the invention is not to be limited to the details given herein.

## Claims

1. A wheel assembly comprising: an inverted U-shaped support frame (1) including a rotating axle (12), a ratchet gear (13) being formed on an end of the rotating axle (12), a limiting device (3) movably pivoted between the wheel and the support frame (1) by the axis lever (21), and including a pressing unit (31) on an end thereof and an arresting unit (32) on an opposite end and at least a tooth-like biasing portion (324) being formed on an edge of the link plate (321) and opposite the support plate (322), at least a stop portion (327) being formed on the support plate (322) for abutting against the wheel (2),wherein the wheel assembly is **characterized in** further comprising:
a wheel (2) movably coupling to elongated grooves (11) of the support frame (1) by an axis lever (21); , the arresting unit (32) having a link plate (321), a support plate (322), and a transverse plate connecting the link plate (321) and the support plate (322), , and a tooth-like protrusion (325) being formed on the transverse plate for corresponding to the ratchet gear (13).

2. The wheel assembly as claimed in claim 1, wherein the link plate (321) forms wing plates (326) on opposite ends thereof, and wherein the limiting device (3) further comprises a holes therein for engaging with the wing plates (326).

3. The wheel assembly as claimed in claim 1, wherein the stop portion (327) comprises a screw bolt (3271), a pressing block connecting with an end of the screw bolt (3271), and a nut on the screw bolt (3271).

## Patentansprüche

1. Eine Radanordnung beinhaltend: einen umgekehrten U-förmigen Stützrahmen (1) inklusive einer rotierenden Achse (12), einem Sperrad (13) das an einem Ende der rotierenden Achse (12) herausgeformt ist, einer Begrenzungseinrichtung (3) zwischen dem Rad und dem Stützrahmen (1), drehbar durch den Achshebel (21) und beinhaltend eine Druckeinheit (31) an einem Ende und einer Arretiereinheit (32) am anderen sowie zumindest einem zahnartigen Verzerrungsteil (324) das an einer Kante der Verbindungsplatte (321) und gegenüber der Stützplatte (322) geformt ist, zumindest einem Stopteil (327) das auf der Stützplatte (322) zum Anliegen an das Rad (2) geformt ist, wobei die Radanordnung characterisiert ist indem sie enthält:
ein Rad (2) das beweglich mit länglichen Zacken (11) des Stützrahmens durch den Achshebel (21) gekoppelt ist, einer Arretiereinheit (32) mit einer Verbindungsplatte (321), einer Stützplatte (322) und einer Querplatte als Verbindung zwischen Verbindungsplatte (321) und der Stützplatte (322) und einem zahnartigen Vorsprung (325), der auf der Querplatte zum Zusammenspiel mit dem Sperrad (13) geformt ist.

2. Die Radanordnung beansprucht wie in Anspruch 1, wobei die Verbindungsplatte (321) Flügelplatten (326) an ihren gegenüberliegenden Enden hervorbringt und die Begrenzungseinrichtung (3) weiterhin Löcher beinhaltet zum Zusammenwirken mit den Flügelplatten (326).

3. Die Radanordnung wie beansprucht in Anspruch 1, wobei der Stopteil (327) besteht aus einem Schraubenbolzen (3271), einem Andruckblock der mit einem Ende des Schraubenbolzens (3271) verbunden ist und einer Mutter auf dem Schraubenbolzen (3271).

## Revendications

1. Ensemble pour roue comprenant : une ossature de soutien inversée en forme de U (1) comprenant un axe rotatif (12), un engrenage à rochet (13) étant formé sur un bout de l'axe rotatif (12), un dispositif de limitation (3) tourné de manière mobile entre la roue et l'ossature de soutien (1) par un levier d'axe (21), et comprenant un unité de pression (31) sur un bout et une unité d'arrêt (32)sur un autre bout et au moins d'une partie oblique en forme de dent (324) étant formée sur une bordure de la plaque de liaison(321) et en face de la plaque de soutien (322), au moins d'une partie d'arrêt (327) étant formée sur la plaque de soutien (322) pour buter contre la roue (2), donc l'ensemble pour roue est **caractérisé en ce qu'**il comporte :
une roue(2) couplée avec les rainures allongées (11) de l'ossature de soutien (1) par un levier d'axe (21), l'unité d'arrêt (32) possédant une plaque de liaison (321), une plaque de soutien (322), une plaque transversale connectant la plaque de liaison (321)et la plaque de soutien (322), et une saillie en forme de dent (325) étant formée sur la plaque transversale pour correspondre l'engrenage à rochet (13).

2. Ensemble pour roue selon la revendication 1, **caractérisé en ce que** la plaque de liaison (321) forme les plaques d'aile (326) sur les autres bouts, et que le dispositif de limitation (3) comporte un trou pour engager les plaques d'aile (326).

3. Ensemble pour roue selon la revendication, **caractérisé en ce que** la partie d'arrêt (327) comporte un boulon (3271), un bloc de pression connectant avec un bout du boulon (3271), et un écrou sur le boulon (3271).
